# EUROPÄISCHE PATENTANMELDUNG

(11) **EP 2 226 290 A2**
(43) Veröffentlichungstag der Anmeldung: **08.09.2010**
(21) Anmeldenummer: 10155530.8
(22) Anmeldetag: 04.03.2010
(51) Int. Cl.: C01B 3/06, C01B 33/021

(54) **Verfahren zum Bereitstellen und Einsetzen eines Energieträgers, insbesondere für Fahrzeuge**

(30) Priorität: 04.03.2009 EP 09154271
(71) Anmelder: Silicon Fire AG, 6045 Meggen (CH)
(72) Erfinder: Grauer Peter, 6045 Meggen (CH)
(74) Vertreter: OK pat AG

(57) **Zusammenfassung**

Fahrzeug (3) mit einem Antrieb, der Wasserstoff umsetzt. Das Fahrzeug (3) umfasst einen Aufnahmebereich zur Aufnahme von Silizium und einen Aufnahmebereich zur Aufnahme einer Lauge. Ausserdem ist ein Hydrolysereaktor vorgesehen, in dem die Lauge und das Silizium umgesetzt werden zu Wasserstoff.

## Beschreibung

Die vorliegende Anmeldung betrifft Verfahren zum Bereitstellen speicherbarer und transportabler Energieträger.

Es wird die Priorität der europäischen Patentanmeldung EP 09 154 271.2 beansprucht, die am 4. März 2009 beim Europäischen Patentamt hinterlegt worden ist.

Es geht im Folgenden insbesondere um den Einsatz von Energieträgern auf oder in Fahrzeugen, insbesondere in Booten und Schiffen.

Im Moment ist Methanol (CH₃OH) ein Treibstoff, der, wenn er auf die richtige Art und Weise hergestellt wird, als CO₂-neutral betrachtet werden kann. Beim Verbrennen von Methanol entsteht jedoch CO₂. Daher besteht ein Bedarf dieses CO₂ wieder einzufangen, um es einer weiteren Verwendung zuführen zu können.

Es ist daher Aufgabe der Erfindung Verfahren zum Verfügbarmachen und Einsetzen eines Energieträgers, insbesondere für Fahrzeuge, bereit zu stellen.

Die Merkmale eines Verfahrens zum Betreiben eines Fahrzeugs sind dem Hauptanspruch zu entnehmen.

In den Zeichnungen sind verschiedene Aspekte der Erfindung schematisch dargestellt, wobei die Zeichnungen zeigen:
- Fig. 1:: ein Schema, welches das Prinzip eines ersten Verfahrens der Erfindung darstellt;
- Fig. 2:: ein Schema, welches das Prinzip eines zweiten Verfahrens der Erfindung darstellt;
- Fig. 3:: ein Schema, dem zu entnehmen ist, das Methanol unter Verwendung von CO₂ hergestellt werden kann, und dass beim Verbrennen von Methanol wieder CO₂ entsteht;
- Fig. 4:: ein Schema, welches das Prinzip eines weiteren Verfahrens der Erfindung darstellt;
- Fig. 5:: ein Schema, welches das Prinzip eines weiteren Verfahrens der Erfindung darstellt;
- Fig. 6:: ein Schema, welches das Prinzip eines weiteren Verfahrens der Erfindung darstellt.

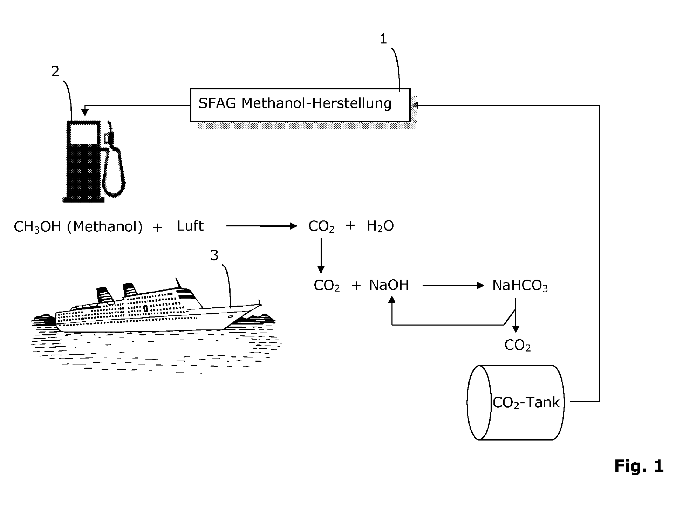

Fig. 1 zeigt eine ersten erfindungsgemässen Verfahrensansatz. Es wird Methanol oder ein methanol-basierter Flüssigtreibstoff hergestellt (Schritt 1), indem CO₂ und/oder CO als Kohlenstofflieferant eingesetzt wird. Vorzugsweise wird das CO₂ und/oder CO aus einem Verbrennungsprozess oder einem Oxidationsprozess entnommen. Besonders bevorzugt ist eine Ausführungsform, bei welcher das CO₂ und/oder CO aus den Abgasen der Verbrennung des Flüssigtreibstoffs stammt. Details zu einem derartigen Herstellungsverfahren sind z.B. der internationalen Patentanmeldung PCT/EP2009/060472 zu entnehmen, die am 13. August 2009 im Namen der Silicon Fire AG eingereicht worden ist.

Über eine Tankstelle, z.B. mit einer konventionellen Zapfsäule 2, kann der methanol-basierte Flüssigtreibstoff an ein Fahrzeug, z.B. ein Schiff 3, abgegeben werden. Im Schiff 3 wird der methanol-basierte Flüssigtreibstoff mit Luft oder mit reinem Sauerstoff in einem Verbrennungsmotor oder in einer Brennstoffzelle (z.B. eine Direkt-Methanol Brennstoffzelle) umgesetzt, um z.B. das Fahrzeug 3 anzutreiben, oder um Nebenaggregate zu betreiben. Dabei entstehen CO₂ und Wasser. Das CO₂ kann entweder direkt gebunkert (eingefangen) werden, wenn die Abgase relativ sauber sind, oder es wird mit einer Rauchgaswäsche eingefangen und abgetrennt, wie in Fig. 1 angedeutet. Bei der Rauchgaswäsche kommt vorzugsweise ein alkalisches Medium zum Einsatz. Hier wird NaOH als alkalisches Medium eingesetzt. Dieses alkalische Medium wird entweder im Fahrzeug 3 rezykliert und erneut eingesetzt, oder das Rezyklieren findet außerhalb des Fahrzeugs 3, z.B. im Hafen statt. Letztendlich kann dann das CO₂, das eingefangen wurde, erneut zur Herstellung vom Flüssigtreibstoff eingesetzt werden, wie in Fig. 1 gezeigt.

Wie in Fig. 1 gezeigt, entsteht aus CO₂ zusammen mit NaOH Natriumhydrogencarbonat (NaHCO₃). Durch Trocken oder durch die Zugabe einer saueren Lösung kann das CO₂ aus dem NaHCO₃ wieder ausgetrieben werden. CO₂ kann z.B. in einem CO₂-Tank gelagert werden, bevor es erneut zur Herstellung vom Flüssigtreibstoff eingesetzt wird, wie in Fig. 1 gezeigt.

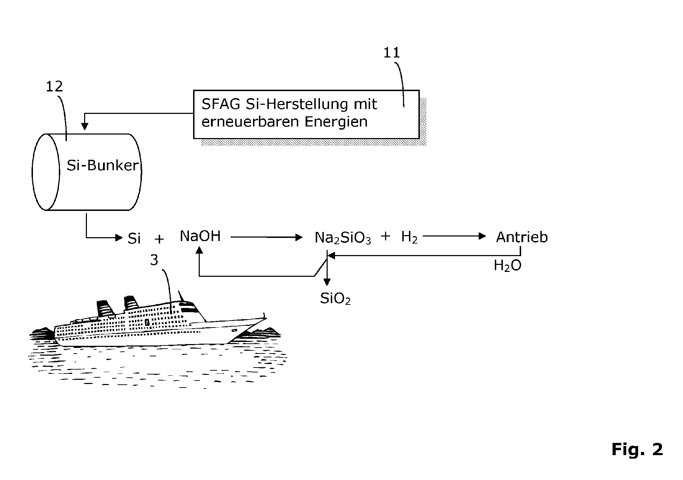

Bei einer 2. Ausführungsform, die in Fig. 2 schematisch dargestellt ist, kommt ein elementares Metall (z.B. Silizium) als Energieträger zum Einsatz. Das elementare Metall wird in einer Anlage 11 hergestellt, die vorzugsweise mit erneuerbaren Energien (z.B. Solarstrom oder Solarthermie) betrieben wird. Um die Reduktion eines Oxids (SiO₂) zu einem elementaren Metall zu vereinfachen oder zu beschleunigen, können Katalysatoren eingesetzt werden, oder es kann eine stromunterstützte Umsetzung, z.B. in einer Salzschmelze, stattfinden. Vorzugsweise findet hier der FCC-Cambridge Ansatz Anwendung. Das Metall wird aus einem Bunker 12 an das Fahrzeug 3 übergeben. Im Fahrzeug 3 kann eine chemische Reaktion (z.B. eine Hydrolyse) eingesetzt werden, um Wasserstoff (H₂) zu erzeugen. Wasserstoff kann dann verbrannt werden, oder eine Brennstoffzelle antreiben. In Fig. 2 ist ein besonders vorteilhafter Weg gezeigt, bei dem die Umsetzung zu Wasserstoff mittels einer Lauge (hier z.B. NaOH oder NaHCO₃) erfolgt. Dabei entsteht im gezeigten Beispiel Wasserglas (Na₂SiO₃) oder Natriumsilikat. Das Oxid (hier SiO₂) fällt aus und kann zum Beispiel ins Wasser abgeben werden. Das Zurückführen des Na₂SiO₃ erfolgt vorzugsweise an Land und nicht auf dem Schiff 3. Für diese Rückführung wird Wärme und Wasser benötigt. So kann aus dem Na₂SiO₃ wieder NaOH und Sand (SiO₂) gewonnen werden. NaOH kann dann wieder auf dem Schiff 3 zum Einsatz kommen. Ein entsprechend angetriebenes Schiff 3 stößt nur Wasserdampf (H₂O) aus.

Vorzugsweise kommt in dem Verfahren nach Fig. 2 sogenanntes Ferro-Silizium mit einem Silizium-Anteil zwischen 82 - 92 % zum Einsatz. Vorzugsweise wird die Lauge, z.B. die NaOH Lauge, in getrockneter Form transportiert und bei Bedarf mit Wasser verdünnt/angesetzt. Besonders bewährt hat sich eine 25%ige bis 40%ige Lösung von NaOH.

In dem Fahrzeug 3 kann eine Rühr- oder Durchmischungsvorrichtung eingesetzt werden, um die Lauge anzusetzen. Beim Ansetzen der Lauge ergibt sich eine Erwärmung, die vorteilhaft ist, da sie die Umsetzung (Hydrolyse) von Silizium und somit die Wasserstoffproduktion befördert. Beim Erzeugen der Lösung erwärmt sich die Lauge auf 60 - 80 °C.

Zum Trennen von Wasserstoff und Wasserdampf wird in dem Fahrzeug 3 ein Kondensator in Rohrbauart eingesetzt.

Vorzugsweise kommt in dem Fahrzeug 3 ein Wasserstoff-Zwischenspeicher zum Einsatz, um Leistungsschwankungen auszugleichen.

Vorzugsweise wird die Hydrolyse des Verfahrens nach Fig. 2 in einem Temperaturbereich zwischen 80 Grad und 180 Grad Celsius betrieben.

Es wird als ein weiterer Vorteil angesehen, dass sowohl Methanol als auch Silizium im Falle einer Schiffkollision keine oder nur geringe Umweltschäden auslösen würde. Diesel, wie es bisher in grossen Schiffen verwendet wird, ist hingegen eine extreme Belastung für die Gewässer.

Bei geeigneter Prozessführung kann die Lauge in beiden Ausführungsformen wieder zurück gewonnen werden. Das ist wichtig, da die Herstellung der Lauge energieaufwendig ist, und somit die Gesamtenergiebilanz negativ beeinflussen würde.

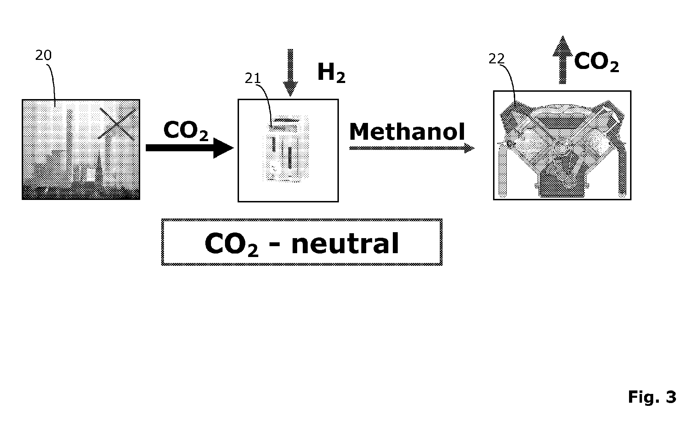

Weitere Aspekte der Erfindung sind den Figuren 3 und den folgenden Figuren zu entnehmen.
Fig. 3 zeigt ein Schema, dem zu entnehmen ist, dass Methanol unter Verwendung von CO₂ hergestellt werden kann. Das CO₂ für die Herstellung von Methanol kann zum Beispiel aus einem Kraftwerk 20 stammen. Wasserstoff kann z.B. mittels Elektrolyse bereitgestellt werden. Aus Wasserstoff und CO₂ lässt sich Methanol synthetisieren, wie in Fig. 3 durch einen Reaktor 21 angedeutet. Wenn das Methanol nun in einem Verbrennungsmotor 22 verbrannt wird, dann entsteht neben Wasser hauptsächlich wieder CO₂. Dieser Ansatz wird als CO₂-neutral betrachtet, wenn beim Herstellen des Wasserstoffs und bei der Synthese des Methanols kein CO₂ entsteht. Details zu einem derartigen Herstellungsverfahren sind z.B. der internationalen Patentanmeldung PCT/EP2009/060472 zu entnehmen, die am 13. August 2009 im Namen der Silicon Fire AG eingereicht worden ist.

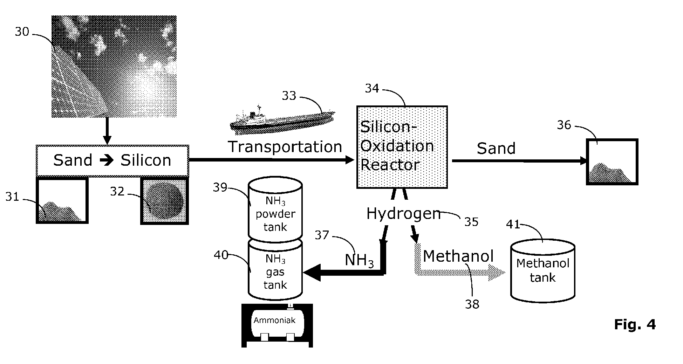

Fig. 4 zeigt nun eine weitere Ausgestaltung des Verfahrens nach Fig. 3. Es wird mit regenerativer Energie (hier mittels Solarzellen 30) die Reduktion eines Metalloxids zu elementarem Metall durchgeführt. Hier wird Sand (SiO₂) 31 zu Silizium (Si) 32 reduziert. Das Silizium (z.B. in Pulverform) lässt sich problemlos lagern und transportieren, wie durch ein Transportschiff 33 dargestellt. In einem Silizium-oxidations- Reaktor 34 kann die Energie, die in diesem elementaren Material gespeichert ist, genutzt werden, um Wasserstoff (Hydrogen) 35 zu erzeugen. Als Reaktionsprodukt entsteht außerdem wieder ein Oxid (hier Sand; SiO₂) 36. Der Wasserstoff (Hydrogen) 35 kann eingesetzt werden, um entweder Ammoniak (NH₃) 37 über eine Haber-Bosch-Synthese herzustellen, oder um Methanol 38 zu synthetisieren, wie beschrieben. Ammoniak (NH₃) 37 kann in einem Pulvertank 39 (Salztank) oder in einem Gastank 40 gespeichert werden. Das Methanol 38 kann in einem Methanoltank 41 gespeichert werden.

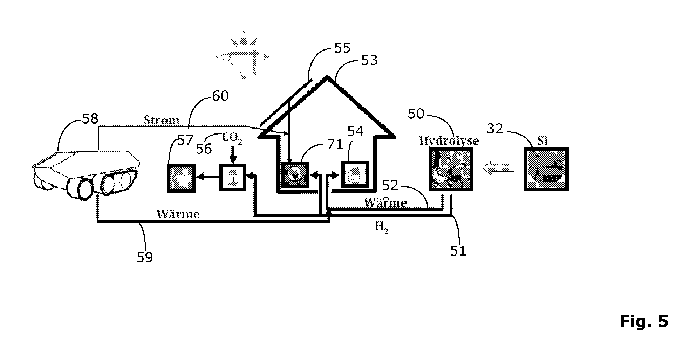

In Fig. 5 ist dargestellt, dass aus dem elementaren Silizium 32 mittels Hydrolyse in einem Hydrolyse-Reaktor 50 Wasserstoff 51 und Wärme 52 entsteht. Die Wärme 52 kann zum Beispiel verwendet werden, um in einem Gebäude 53 eine Heizung 54 zu betreiben. Mit regenerativer Energie, z.B. aus Solarzellen 55, kann aus dem Wasserstoff 51 und aus CO₂ 56 Methanol 57 synthetisiert werden, wie bereits beschrieben. Ein Fahrzeug 58 kann, wenn es ein ähnliches Aggregat wie den Hydrolyse-Reaktor 50 aufweist, auch Wärme 59 und z.B. Strom 60 liefern.

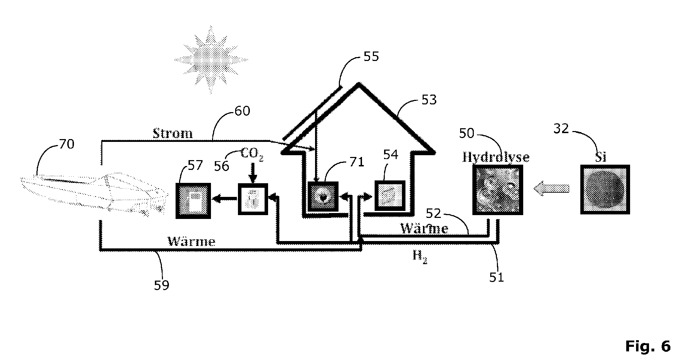

Fig. 6 zeigt einen vergleichbaren Ansatz, bei dem eine Yacht 70 statt eines Fahrzeugs 58 zum Einsatz kommt. Hier werden dieselben Bezugszeichen verwendet und es wird auf die Beschreibung der Fig. 5 verwiesen.

In dem Gebäude 53 kann auch ein Reaktor oder eine Brennstoffzelle 71 zum Einsatz kommen, um den Wasserstoff 51 in Strom umzuwandeln.

## Patentansprüche

1. Verfahren zum Betreiben eines Fahrzeugs (3, 58, 70), mit den folgenden Schritten:
- Herstellen (11) von Silizium (32) unter Einsatz erneuerbarer Energie (30),
- Übergeben von Silizium in das Fahrzeug (3, 58, 70),
- Bereitstellen von Lauge in dem Fahrzeug (3, 58, 70),
- Durchführen einer Hydrolysereaktion in dem Fahrzeug (3, 58, 70), um Wasserstoff zu erzeugen, wobei die Lauge, vorzugsweise Natronlauge, eingesetzt wird, um mit dem Silizium (32) zu reagieren,
- Einsetzen des Wasserstoffs in einem Verbrennungsmotor oder in einer Brennstoffzelle, um das Fahrzeug (3, 58, 70) anzutreiben,
- Rückgewinnung der Lauge.

2. Verfahren nach Anspruch 1, wobei im Rahmen der Hydrolysereaktion Na₂SiO₃ und Wasserstoff entstehen.

3. Verfahren nach Anspruch 1 oder 2, wobei es sich bei dem Fahrzeug (3, 58, 70) um ein Schiff (3, 70) handelt und die Rückgewinnung der Lauge an Land und nicht auf dem Schiff (3, 70) erfolgt.

4. Verfahren nach Anspruch 1, 2 oder 3, **dadurch gekennzeichnet, dass** Solarzellen oder Solarthermie (30) eingesetzt wird, um das Silizium (32) herzustellen.

5. Verfahren nach einem der vorhergehenden Ansprüche, **dadurch gekennzeichnet, dass** das Silizium (32) unter Einsatz erneuerbarer Energie (30) in einer sonnereichen Gegend erzeugt und mittels eines Schiffs (33) an einen Einsatzort transportiert wird.

6. Fahrzeug (3, 58, 70) mit einem Antrieb, der Wasserstoff umsetzt und mit
- einem Aufnahmebereich zur Aufnahme von Silizium (32), einem Aufnahmebereich zur Aufnahme einer Lauge,
- einem Hydrolysereaktor (34, 50) in dem die Lauge und das Silizium (32) umgesetzt werden zu Wasserstoff.

7. Fahrzeug nach Anspruch 6, **dadurch gekennzeichnet, dass** es einen Kondensator zum Trennen von Wasserstoff und Wasserdampf umfasst.

8. Gesamtsystem mit einem Fahrzeug (3) mit einem Antrieb, gemäss einem der Ansprüche 6 oder 7, und mit einer stationären Anlage zum Rückgewinnen der Lauge aus Reaktionsprodukten der Hydrolyse.
